# EUROPEAN PATENT APPLICATION

(11) **EP 2 460 687 A1**
(43) Date of publication of application: **06.06.2012**
(21) Application number: 11250904.7
(22) Date of filing: 21.11.2011
(51) Int. Cl.: B60P 1/52

(54) **Mechanical handling apparatus**

(30) Priority: 06.12.2010 GB 201020611
(71) Applicant: Blackrock Engineering Limited, Great Budworth, Nr. Northwich, Cheshire CW9 6HF (GB)
(72) Inventor: Kordel, Wojtek, Liverpool L19 2NY (GB); Jones, Nesta, Liverpool L19 2NY (GB)
(74) Representative: Cawley, Aimee Elizabeth

(57) **Abstract**

A mechanical handling apparatus for handling a load comprising an elongate housing (11), comprised of a base from which two substantially upstanding side members extend, an elongate support plate (14) for supporting the load, said support plate being mounted with respect to the housing and having at least two apertures (15) therein, a load handling means (e.g. a pair of rollers)(16) provided in the housing in register with the apertures in the support plate (14), said load handling means (16) having a retracted position within the housing (11) and a non-retracted position in which at least a portion thereof protrudes through the apertures in the support plate, a closed-end channel member (17) provided in the housing (11), said channel member (17) having an upper position adjacent to the support plate and a lower position adjacent to the base of the housing, and a moving means (18) (e.g. inflatable airbag) provided in the housing that is capable of moving both the load handling means (16) and the channel (17) member with respect to both the housing and the support plate (14), wherein the base (12) of the housing is provided with a pair of elongate protrusions (19), which extend into the housing, between which the moving means (18) is provided and onto which the channel member (17) is capable of resting in its lower position.

## Description

The present invention relates to a mechanical handling apparatus, and in particular to a mechanical handling apparatus provided with retractable load handling means.

Numerous mechanical handling apparatus for handling goods or other loads are known. One prior art apparatus comprises a load handling means in the form of a single row of rollers, each being mounted on an axle, which is supported by an inflatable device in the form of an airbag. Upon inflation of the inflatable device, at least a part of each of the rollers protrudes above a support surface, thereby rendering any goods/load on the rollers mobile over the support surface. Conversely, when the inflatable device is deflated, the rollers are wholly retracted below the support surface, leaving the goods/load immobile on said surface. A single row of apertures is provided in the support surface to allow the rollers to be moved between their retracted position and their protruding position, with one aperture being provided per roller.

A problem with this known apparatus is that debris is able to fall through the apertures provided in the support surface and onto the inflatable device, whereupon said debris may puncture the inflatable device, thereby rendering it useless.

A proposed solution has been to provide a channel-shaped body below the row of rollers to capture as much of the debris that falls through the apertures as possible. However, the channel-shaped body has open ends and thus cannot entirely prevent debris from falling onto, and being able to puncture, the inflatable device below.

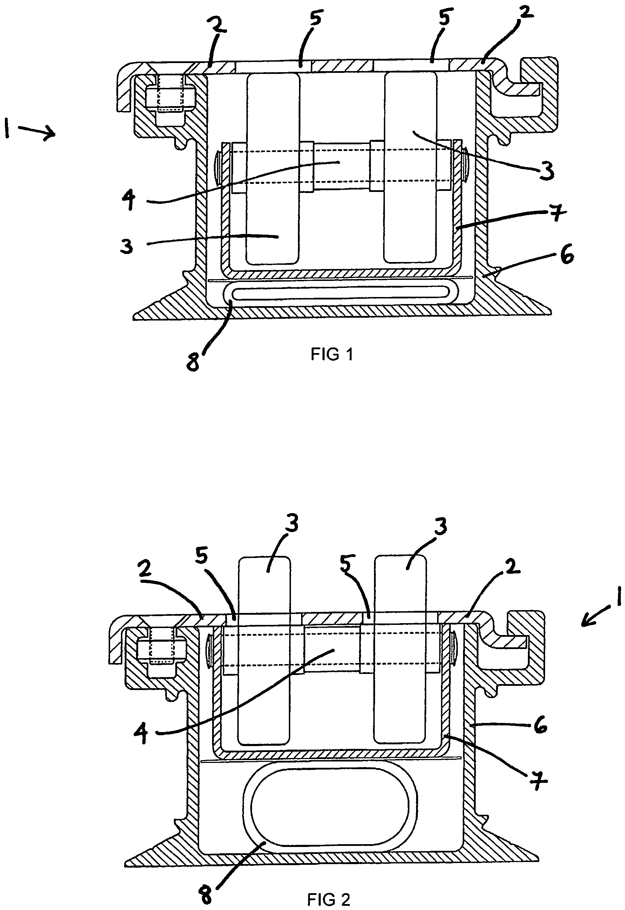

A further solution has thus been to modify the known mechanical handling apparatus by (a) providing at least two rollers per axle and one aperture per roller, and (b) providing the channel-shaped body with end plates so as to close off the open ends thereof. Such an apparatus is shown in Figures 1 and 2.

Figures 1 and 2 show a prior art mechanical handling apparatus 1 comprising a support surface 2 for supporting a load, and over which it is intended the load to be mobile, and a plurality of rollers 3, each roller being rotatably mounted on an axle 4 for moving a load over the support surface 2. The support surface 2 comprises an aperture 5 for each roller 3, so that either the rollers 3 or the support surface 2 can be moved between a first position in which at least a part of each roller 3 is proud of the support surface 2 (as shown in Figure 2) and a second position in which each roller 3 is substantially flush with or recessed below the support surface 2 (as shown in Figure 1), with at least two rollers 2 being mounted on each axle 4.

The apparatus 1 comprises a channel-shaped housing 6 which is closed by the support surface 2. The housing 6 contains a plurality of channel-shaped bodies 7, each having a plurality of rollers 3 mounted therein on a series of parallel axles 4 which extend across the width of the channel-shaped body 7. There are two rollers 3 on each axle 4. The support surface 2 comprises an aperture 5 for each roller 3, each roller 3 being vertically aligned with its associated aperture 5.

The housing 6 contains an inflatable air bag 8 which is positioned beneath the channel-shaped bodies 7. The air bag 8 is connected to an air supply (not shown), which may be the existing air supply of a vehicle. The air bag 8 may be inflated so that it moves the channel-shaped bodies 7, and thus the rollers 3, from their second position (shown in Figure 1) in which the rollers 3 are recessed below the support surface 2 to their first position (shown in Figure 2) in which part of the rollers 3 is proud of the support surface 2. If there is a load supported on the support surface 2, the load will then be lifted clear of the support surface 2 by the rollers 3. The load can then be moved over the rollers 3.

The clearance between each roller 3 and its associated aperture 5 is such as to minimize the amount of debris that can enter each channel-shaped body 7. Because there are two small rollers 3 on each axle 4, having two small apertures 5 associated therewith, rather than one large roller having one large aperture associated therewith as with other mechanical handling apparatus, the amount of debris that can enter each channel-shaped body 7 is further reduced.

With each of modifications (a) and (b), it was thus possible to reduce the size of the apertures and thereby reduce the amount of debris that could fall through said apertures, and to capture any such fallen debris in the channel-shaped body to prevent puncturing of the inflatable device.

As in other industries however, there is currently much emphasis in the load handling and transportation industry for greater efficiency, particularly in terms of utilization of available transportation volume. In many cases, local legislation determines the maximum transportation dimensions possible. For example, in the UK, the Road Vehicles (Construction and Use) Regulations 1986 as amended state that any articulated vehicle over 35 tonnes in weight may not exceed 4.2 metres in height, whereas in Europe this reduces to 4 m in height. It would therefore be desirable to make best use of the volume available per vehicle.

With such efficiency in mind, the present inventors sought to improve on the prior art solution illustrated in Figures 1 and 2 so as to maintain the benefits achieved with this solution, but to enable a greater volume of goods/load to be packed into a means of transport.

Accordingly, the present invention provides an improved mechanical handling apparatus for handling a load, the apparatus comprising:
an elongate housing, comprised of a base from which two substantially upstanding side members extend,
an elongate support plate for supporting the load, said support plate being mounted with respect to the housing and having at least two apertures therein,
a load handling means provided in the housing in register with the apertures in the support plate, said load handling means having a retracted position within the housing and a non-retracted position in which at least a portion thereof protrudes through the apertures in the support plate,
a closed-end channel member provided in the housing, said channel member having an upper position adjacent to the support plate and a lower position adjacent to the base of the housing, and
a moving means provided in the housing that is capable of moving both the load handling means and the channel member with respect to both the housing and the support plate,
   wherein the base of the housing is provided with a pair of elongate protrusions, which extend into the housing, between which the moving means is provided and onto which the channel member is capable of resting in its lower position.

Provision of such an improved mechanical handling apparatus allows the overall depth of the apparatus to be reduced (as compared to the prior art mechanical handling apparatus shown in Figures 1 and 2), which means that when such apparatus is fitted into a transportation means, the volume occupied by the apparatus is reduced so that more volume is available for packing of goods/load.

Furthermore, the benefits previously achieved with the prior art mechanical handling apparatus shown in Figures 1 and 2 are maintained: positioning of the moving means between the pair of elongate protrusions provided on the inner surface of the base of the housing ensures that when the channel member rests in its lower position on said protrusions, the moving means is thereby effectively temporarily sealed in a cavity that is created, thus ensuring that any debris that may fall through the apertures in the support plate cannot reach and possibly damage the moving means. Moreover, the elongate protrusions ensure that the moving means positioned therebetween is not squashed by the channel member in its lower position.

A further benefit of the present invention is that, as the apparatus is typically wider compared to the prior art apparatus shown in Figures 1 and 2, a better distribution of the weight of a load is possible, rather than the "point-load" situation that could be more prevalent with the prior art apparatus.

In the mechanical handling apparatus of the invention, it is preferred that the load handling means is moveable between its retracted position and its non-retracted position, the channel member is moveable between its upper position and its lower position, and the moving means is capable of moving both the load handling means and the channel member between their respective positions.

Further preferably, the load handling means and the channel member are joined together and thereby moveable together by the moving means. With such a configuration, the initial (non-use) position of each of the channel member is its lower position resting on the elongate protrusions and of the load handling means is its retracted position, whilst the subsequent (use) position of each of the channel member is its upper position adjacent to a lower surface of the support plate and of the load handling means is its non-retracted position in which at least a portion thereof protrudes through the apertures in the support plate.

Yet further preferably, the moving means acts on the channel member to move both the load handling means (indirectly) and the channel member (directly) from each of their initial positions to their subsequent positions.

Advantageously the load handling means comprises a pair of retractable rollers rotatably mounted on a moveable axle in the housing below the support plate. Said moveable axle is preferably moveable in a substantially vertical plane as the load handling means is moved between its retracted position and its non-retracted position.

Further advantageously, each retractable roller may be provided in register with an aperture in the support plate. Provision of one aperture per roller ensures that the space available for any debris to fall through is minimized. The moving means may then be able to raise the rollers through the apertures in the support plate (such that at least a portion of each of the rollers protrudes therethrough) into a non-retracted position.

Thus the moving means is preferably able to raise the moveable axle to a position adjacent to and in contact with a lower surface of the support plate; such a position is preferably the uppermost position achievable by the moveable axle and thus it defines the portion of each of the rollers that protrudes through the apertures in the support plate.

Beneficially, the diameter of the rollers may be less than or equal to the depth of the housing, thereby enabling full retraction of the rollers into the housing so that the rollers are recessed below (or at least flush with) an upper surface of the support plate.

In the mechanical handling apparatus of the invention, the moving means may preferably comprise an inflatable airbag that is inflated and deflated by an appropriate air source. Of course, air or any other suitable fluid medium may be used to inflate the airbag as required.

The dimensions of the mechanical handling apparatus according to the invention may be such that the housing has a width of less than 200 mm, preferably less than 180 mm and further preferably around 160 mm, and a depth of less than 70 mm, preferably less than 60 mm and further preferably less than 50 mm. The housing is preferably channel-shaped or U-shaped also.

The width of the housing is hereby defined as the total distance from the outermost surface of one side member to the outermost surface of the other side member (including in both cases any protrusions thereto), i.e. the width of the U-shape.

The depth of the housing is hereby defined as the total distance from the lowermost surface of the base to the uppermost surface of the support plate (with the load handling means in their retracted position), i.e. the depth of the U-shape.

The length of the housing is defined as the total distance over which the base extends in a direction perpendicular to the general channel-shape or U-shape thereof.

One or more mechanical handling apparatus according to the invention may be used for handling and transporting a load by land, sea or air.

According to a second aspect of the present invention, there is also provided transportation means, for handling and transporting a load, fitted with one or more mechanical handling apparatus as claimed in claim 1. Typically at least four, but often five or six, rows of such mechanical handling apparatus may be fitted in a transportation means.

The transportation means may comprise a trailer for a truck, lorry or other drive unit. Alternatively, the transportation means may comprise an aircraft, especially a cargo aeroplane.

For a better understanding, the present invention will now be more particularly described by way of non-limiting example only, with reference to and as shown in the accompanying schematic drawings (not to scale), in which:
Figure 1 is a sectional view of a prior art mechanical handling apparatus shown with its rollers in their second position;
Figure 2 is a sectional view of the prior art mechanical handling apparatus of Figure 1 but shown with its rollers in their first position;
Figure 3 is a plan view from above of a section of a mechanical handling apparatus according to the invention;
Figure 4 is a side view of the mechanical handling apparatus shown in Figure 3;
Figure 5 is a sectional view of the mechanical handling apparatus shown in Figures 3 and 4, when viewed along line A-A of Figure 3, when in a first position;
Figure 6 is a sectional view of the mechanical handling apparatus of Figure 5 when in a second position;
Figure 7 is sectional side view of a transportation means according to the invention; and
Figure 8 is a sectional plan view of the transportation means of Figure 7.

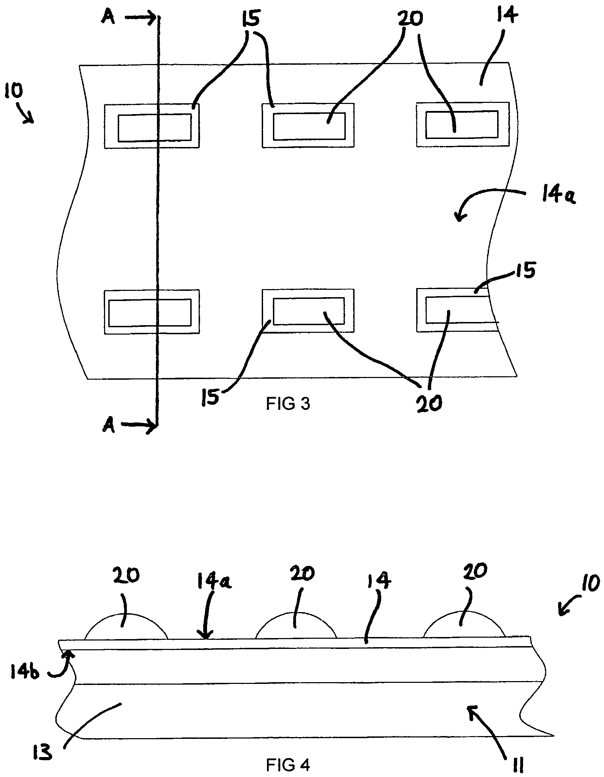

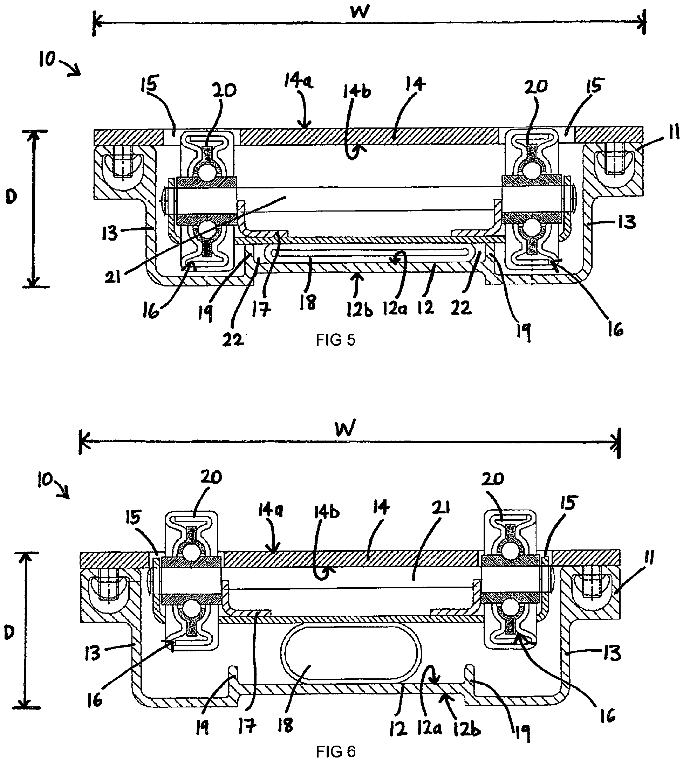

Figures 3, 4, 5 and 6 show an improved mechanical handling apparatus 10 for handling and moving goods or some other load (not shown) comprising an elongate housing 11 having a substantially channel-shaped or U-shaped cross-section, and a removable, elongate support plate 14, for supporting the load, having un upper surface 14a and a lower surface 14b, which is mounted on housing 11 and has at least two apertures 15 therein. As depicted in Figures 5 and 6, both housing 11 and support plate 14 are elongate in the direction that extends into the page. Housing 11 is itself comprised of a base 12, having an upper surface 12a and a lower surface 12b, from which two substantially upstanding side members 13 extend.

Base 12 is provided on its upper surface 12a with a pair of elongate protrusions 19, which extend upwardly into housing 11.

Apparatus 10 further comprises within housing 11 a load handling means 16, in the form of at least one pair of retractable rollers 20 rotatably mounted on at least one moveable axle 21 and in register with apertures 15 in support plate 14; at least one closed-end channel member 17 provided within housing 11 for capturing any falling debris (not shown); and at least one moving means 18, in the form of an inflatable airbag, that is capable of moving both load handling means 16 and channel member(s) 17 with respect to both housing 11 and support plate 14. In theory either the load handling means 16 and the channel member(s) 17 may be moved by moving means 18 (with respect to housing 11 and support plate 14) or housing 11 and support plate 14 may be moved by moving means 18 (with respect to load handling means 16 and channel member(s) 17). However in the embodiment shown in Figures 5 and 6, the former is applicable.

As shown in Figures 3 and 4, apparatus 10, when viewed lengthways, comprises a plurality of pairs of rollers 20 (of which three pairs are shown for clarity), having apertures 15 in support plate 14 corresponding to each individual roller 20.

Figure 5 shows load handling means 16 in its retracted position within housing 11, in which rollers 20 are retracted and indeed slightly recessed below the upper surface 14a of support plate 14, and channel member 17 in its lower position adjacent to base 12. Channel member 17 is shown in Figure 5 to be resting upon and in contact with elongate protrusions 19 so as to create a cavity 22 in which moving means 18 is located and by which moving means 18 is protected.

Figure 6 shows load handling means 16 in its non-retracted position within housing 11, in which at least a portion (less than half the diameter) of each of rollers 20 protrudes vertically through the corresponding aperture 15 in support plate 14, and channel member 17 in its upper position adjacent to support plate 14. In this position, any goods/load which would have been static and in contact with the upper surface 14a of support plate 14 with the configuration of Figure 5, will now be raised above upper surface 14a of support plate 14 on rollers 20 and thereby will be mobile over the length of apparatus 10.

In use, moving means 18 acts upon channel member 17 so as to move both load handling means 16 (indirectly) and channel member 17 (directly) between the non-use position shown in Figure 5 and the use position shown in Figure 6, as and when required. As is clearly shown in both Figures 5 and 6, moveable axle 21 is mounted so as to be rotatable through channel member 17. Thus, on connection of the airbag of moving means 18 to a suitable, inflating fluid source, e.g. the air supply to a vehicle in which apparatus 10 is fitted, it is possible to raise rollers 20, axle 21 and channel member 17 to the position shown in Figure 6; the extent of upward travel being limited upon contact of axle 21 with the lower surface 14b of support plate 14.

Moving means 18 is located between protrusions 19 beneath channel member 17 such that base 12, protrusions 19 and a portion of channel member 17 together temporarily form cavity 22 for protection of the airbag from any falling debris.

Each apparatus 10 has a width of less than 200 mm, preferably around 160 mm, and a depth of around 40-60 mm. When such an apparatus 10 is fitted with rollers 20 of diameter less than 60 mm (preferably less than 50 mm, and possibly around 45 mm) such that said rollers 20 are fully retractable into housing 11, when in use (i.e. protruding), preferably no more than 20 mm (and preferably no more than 15 mm) of the diameter of each roller 20 protrudes above support surface 14 (which itself typically has a depth of 3-5 mm).

The spacing between adjacent pairs of rollers 20 (along the length of apparatus 10) is usually less than 100 mm (and may be around 80 mm) when measured from the centre of one roller in a pair to the centre of the same roller in an adjacent pair. Furthermore, the separation between two rollers 20 in each pair (across the width of apparatus 10) is preferably around 100 mm.

When compared to a prior art mechanical handling apparatus of the type shown in Figures 1 and 2, it is clear that the apparatus 10 of the present invention is both wider and shallower (in depth) than the prior art apparatus, meaning that more transportation volume is freed up for packing with goods/load in a transportation means as was previously available and fewer apparatus 10 may be needed per transportation means (because of the increased width of each).

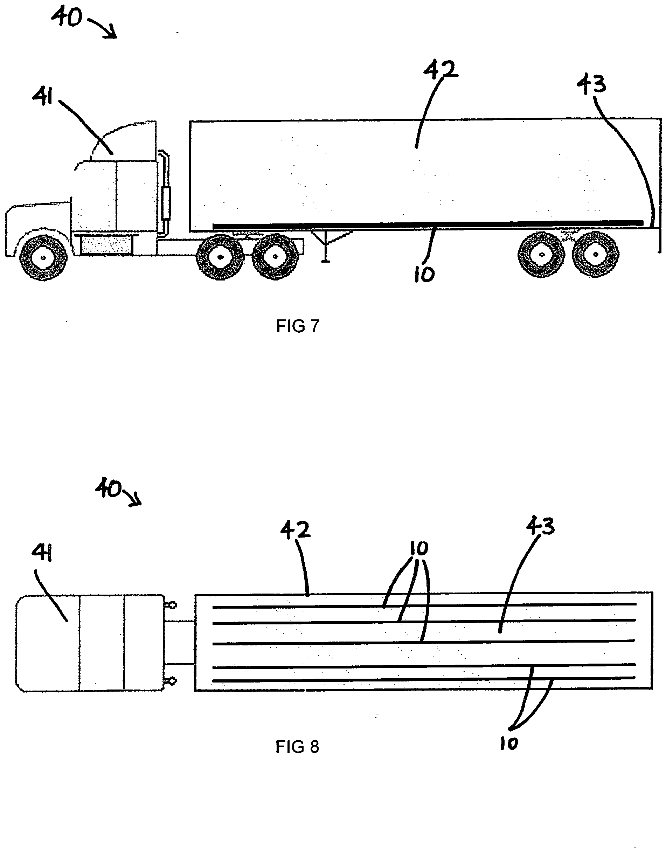

Turning briefly now to Figures 7 and 8, which show a transportation means 40, in the form of an articulated lorry, comprising a truck 41 and a trailer 42 for transportation of goods/load (not shown). Trailer 42 is provided with a trailer floor 43 which is itself provided with a plurality of mechanical handling apparatus 10 (as shown in Figure 3, 4, 5 and 6). As can be seen from Figure 8, five such rows of elongate apparatus 10 are provided so as to move goods/load along trailer floor 43 so as to achieve the best possible packing volume of trailer 42, with minimal wasted or dead space. With the reduced depth of the apparatus 10 according to the invention, it is clear how such packing volume may be increased as compared to the volume available when any of the prior art apparatus are instead used.

## Claims

1. A mechanical handling apparatus for handling a load, the apparatus comprising:
an elongate housing, comprised of a base from which two substantially upstanding side members extend,
an elongate support plate for supporting the load, said support plate being mounted with respect to the housing and having at least two apertures therein,
a load handling means provided in the housing in register with the apertures in the support plate, said load handling means having a retracted position within the housing and a non-retracted position in which at least a portion thereof protrudes through the apertures in the support plate,
a closed-end channel member provided in the housing, said channel member having an upper position adjacent to the support plate and a lower position adjacent to the base of the housing, and
a moving means provided in the housing that is capable of moving both the load handling means and the channel member with respect to both the housing and
the support plate,
wherein the base of the housing is provided with a pair of elongate protrusions,
which extend into the housing, between which the moving means is provided and onto which the channel member is capable of resting in its lower position.

2. A mechanical handling apparatus as claimed in claim 1 wherein the load handling means is moveable between its retracted position and its non-retracted position, the channel member is moveable between its upper position and its lower position, and the moving means is capable of moving both the load handling means and the channel member between their respective positions.

3. A mechanical handling apparatus as claimed in claim 2 wherein the load handling means and the channel member are joined together and thereby moveable together by the moving means.

4. A mechanical handling apparatus as claimed in claim 3 wherein the moving means acts on the channel member.

5. A mechanical handling apparatus as claimed in any preceding claim wherein the load handling means comprises a pair of retractable rollers rotatably mounted on a moveable axle in the housing below the support plate.

6. A mechanical handling apparatus as claimed in claim 5 wherein the moveable axle is moveable in a substantially vertical plane.

7. A mechanical handling apparatus as claimed in claim 5 or claim 6 wherein the moving means is able to raise the moveable axle to a position adjacent to and in contact with a lower surface of the support plate.

8. A mechanical handling apparatus as claimed in any of claims 5, 6 or 7 wherein each retractable roller is provided in register with an aperture in the support plate.

9. A mechanical handling apparatus as claimed in any of claims 5 to 8 wherein the moving means is able to raise the rollers through the apertures in the support plate into a non-retracted position.

10. A mechanical handling apparatus as claimed in any of claims 5 to 9 wherein the diameter of the rollers is less than the depth of the housing, thereby enabling full retraction of the rollers into the housing.

11. A mechanical handling apparatus as claimed in any preceding claim wherein the moving means comprises an inflatable/deflatable airbag.

12. A mechanical handling apparatus as claimed in any preceding claim wherein the housing has a width of less than 200 mm, preferably less than 180 mm and further preferably around 160 mm, and a depth of less than 70 mm, preferably less than 60 mm and further preferably less than 50 mm.

13. A mechanical handling apparatus as claimed in any preceding claims comprised in a transportation means for handling and transporting a load.

14. A mechanical handling apparatus as claimed in claim 13 wherein the transportation means in which said apparatus is comprised itself comprises a trailer for a truck, lorry or other drive unit, or an aircraft.

15. Use of a mechanical handling apparatus as claimed in claim 1 for handling and transporting a load by land, sea or air.
